# EUROPÄISCHE PATENTANMELDUNG

(11) **EP 2 352 256 A2**
(43) Veröffentlichungstag der Anmeldung: **03.08.2011**
(21) Anmeldenummer: 11000649.1
(22) Anmeldetag: 27.01.2011
(51) Int. Cl.: H04L 12/28

(54) **Bereitstellung eines Internetzugangs für eine externe Wiedergabeeinrichtung**

(30) Priorität: 29.01.2010 DE 102010006389
(71) Anmelder: Vodafone Holding GmbH, 40213 Düsseldorf (DE)
(72) Erfinder: Meyer, Sascha, 44289 Dortmund (DE); Schubert, Daniel, 40597 Düsseldorf (DE); Weingart, Peter, 44799 Bochum (DE); Bacquias, Matthieu, 40545 Düsseldorf (DE)
(74) Vertreter: Ring & Weisbrodt

(57) **Zusammenfassung**

Die vorliegende Erfindung betrifft eine Vorrichtung (1) zur Bereitstellung eines Internetzugangs für wenigstens eine externe Wiedergabeeinrichtung (14), vorzugsweise ein Fernsehgerät, und zur Verarbeitung von über das Internet (26) empfangenen und/oder über das Internet (26) zu sendende Daten, wobei die verarbeiteten Daten (28) zumindest teilweise als Ausgangssignal, insbesondere als Video- und/oder Audiosignal, zur Nutzung mittels der wenigstens einen Wiedergabeeinrichtung (14) an wenigstens einer Schnittstelle (2) der Vorrichtung (1) bereitgestellt werden, aufweisend Mittel (10) zum Senden und/oder Empfangen von elektronischen Daten, insbesondere Internetdaten, über ein Mobilfunknetz (27), vorzugsweise ein Mobilfunknetz (27) gemäß einem GSM-, UMTS- und/oder LTE-Mobilfunkstandard, aufweisend Mittel (11) zur elektronischen Datenverarbeitung, aufweisend wenigstens eine Schnittstelle (3) zum Anschließen wenigstens einer Eingabeeinrichtung (12) und aufweisend Mittel zum Verarbeiten von über die Schnittstelle zum Anschließen der wenigstens einen Eingabeeinrichtung (12) empfangenen Steuersignalen.

Des Weiteren betrifft die vorliegende Erfindung ein Verfahren zur Bereitstellung eines Internetzugangs für wenigstens eine externe Wiedergabeeinrichtung (14), vorzugsweise ein Fernsehgerät, und zur Verarbeitung von über das Internet (26) empfangenen und/oder über das Internet (26) zu sendende Daten, wobei die verarbeiteten Daten (28) zumindest teilweise als Ausgangssignal, insbesondere als Video- und/oder Audiosignal, zur Nutzung mittels der wenigstens einen Wiedergabeeinrichtung (14) an wenigstens einer Schnittstelle (2) einer Vorrichtung (1) bereitgestellt werden, und wobei die Bereitstellung des Internetzugangs über ein Mobilfunknetz (27), vorzugsweise ein Mobilfunknetz (27) gemäß einem GSM-, UMTS- und/oder LTE-Mobilfunkstandard erfolgt und die Verarbeitung von Daten, insbesondere von über das Internet (26) empfangenen und/oder über das Internet (26) zu sendende Daten mittels einer erfindungsgemäßen Vorrichtung (1) nach einem der Ansprüche 1 bis 16 erfolgt.

## Beschreibung

Die vorliegende Erfindung betrifft eine Vorrichtung und ein Verfahren zur Bereitstellung eines Internetzugangs für wenigstens eine externe Wiedergabeeinrichtung, vorzugsweise ein Fernsehgerät, und zur Verarbeitung von über das Internet empfangenen und/oder über das Internet zu sendende Daten, wobei die verarbeiteten Daten zumindest teilweise als Ausgangssignal, insbesondere als Video- und/oder Audiosignal, zur Nutzung mittels der wenigstens einen Wiedergabeeinrichtung an wenigstens einer Schnittstelle der Vorrichtung bereitgestellt werden.

Das Internet mit seinen vielfältigen Nutzungsmöglichkeiten, wie dem Zugriff auf Informationen im World Wide Web oder der Nutzung von Kommunikationsdiensten wie E-Mail oder Instant Messaging, gewinnt immer mehr an Bedeutung und ist vielerorts bereits fester Bestandteil des täglichen Lebens. Hierbei bieten sich dem Nutzer unterschiedliche Möglichkeiten auf Internetinhalte zuzugreifen, wobei insbesondere zwei wesentliche Möglichkeiten zu unterscheiden sind, nämlich zum einen der im Wesentlichen leitungsgebundene Zugang und zum anderen der im Wesentlichen drahtlose Zugang. Bei dem im Wesentlichen leitungsgebundenen Zugang zum Internet wird die Internetverbindung üblicherweise über eine Anschlussleitung zwischen einem Modem und einem Einwahlknoten aufgebaut, wobei das Modem üblicherweise mit einem Computer wie einem Personal Computer (PC) oder einem Notebook verbunden ist. Über kürzere Distanzen kann die Übertragung dabei auch leitungslos, beispielsweise mittels WLAN (WLAN: Wireless LAN, LAN: Local Area Network) oder Bluetooth, erfolgen. Bei dem im Wesentlichen drahtlosen Zugang wird die Internetverbindung dagegen üblicherweise über ein Mobilfunknetz zwischen einem Funkmodem und einem Einwahlknoten aufgebaut. Derartige Funkmodems sind insbesondere in modernen Mobilfunktelefonen, insbesondere in sogenannten Smartphones, und Minicomputern wie PDAs (PDA: Personal Digital Assistant) integriert. Unter Verwendung sogenannter UMTS-Datenkarten (UMTS: Mobile Telecommunications System) können aber insbesondere auch Internetverbindungen mit Notebooks über das Mobilfunknetz hergestellt werden.

In vielen Industrienationen und auch in einigen Schwellenländern ist das Internet bereits weit verbreitet und wird von vielen Menschen genutzt. Im privaten häuslichen Bereich sind bislang leitungsgebundene Internetzugänge, wie DSL (DSL: Digital Subscriber Line), im Allgemeinen weiter verbreitet als Internetzugänge über das Mobilfunknetz, was unter anderem daran liegt, dass zumindest bis zur Einführung von UMTS im Mobilfunkbereich leitungsgebundene Internetzugänge eine bedeutend höhere Bandbreite aufweisen als Internetzugänge über das Mobilfunknetz.

Allerdings ist selbst in vielen Ländern, die zur Zeit eine enorme wirtschaftliche Entwicklung erleben, das Internet zumindest noch nicht flächendeckend derart verbreitet, dass zumindest der Großteil der jeweiligen Bevölkerung über einen Zugang zum Internet verfügt. Zwar besteht oftmals auch in diesen Ländern die Möglichkeit, beispielsweise in sogenannten Internet-Cafés über einen Computer, das Internet nutzen zu können, private Internetzugänge sind allerdings eher die Ausnahme. Das liegt einerseits daran, dass in den betreffenden Ländern nur wenige Haushalte an ein einen Internetzugang ermöglichendes Datennetz angeschlossen sind. Andererseits ist die hierfür erforderliche Hardware in der Regel in der Anschaffung für einen Großteil der Bevölkerung zu kostenintensiv. Aus den gleichen Kostengründen scheidet in der Regel auch die Möglichkeit, das Internet mittels sogenannter Smartphones über ein Mobilfunknetz zu nutzen, für einen Großteil der Bevölkerung aus. Zudem wäre eine Nutzung über Smartphones, die lediglich vergleichsweise kleine Displays als Anzeige zur graphischen Darstellung von Internetinhalten aufweisen, wenig komfortabel und kaum geeignet für eine Internetnutzung als gemeinschaftliches Erlebnis innerhalb der Familie oder mit Freunden und Bekannten.

Der Erfindung liegt in Anbetracht des vorgenannten Standes der Technik die Aufgabe zugrunde mittels vergleichsweise geringem Hardwareaufwand einen kostengünstigen Internetzugang bereitzustellen, der möglichst flächendeckend, einfach und komfortabel nutzbar ist. Eine zur Bereitstellung des Internetzugangs nutzbare Vorrichtung weist dabei vorteilhafterweise kompakte Abmessungen auf. Zur technischen Lösung der Aufgabe wird mit der vorliegenden Erfindung eine Vorrichtung zur Bereitstellung eines Internetzugangs für wenigstens eine externe Wiedergabeeinrichtung, vorzugsweise ein Fernsehgerät, und zur Verarbeitung von über das Internet empfangenen und/oder über das Internet zu sendende Daten, wobei die verarbeiteten Daten zumindest teilweise als Ausgangssignal, insbesondere als Video- und/oder Audiosignal, zur Nutzung mittels der wenigstens einen Wiedergabeeinrichtung an wenigstens einer Schnittstelle der Vorrichtung bereitgestellt werden, vorgeschlagen, welche gekennzeichnet ist durch Mittel zum Senden und/oder Empfangen von elektronischen Daten, insbesondere Internetdaten, über ein Mobilfunknetz, vorzugsweise ein Mobilfunknetz gemäß einem GSM-, UMTS- und/oder LTE-Mobilfunkstandard (GSM: Global System for Mobile Communications, UMTS: Universal Mobile Telecommunications System, LTE: Long Term Evolution), Mittel zur elektronischen Datenverarbeitung, wenigstens eine Schnittstelle zum Anschließen wenigstens einer Eingabeeinrichtung und Mittel zum Verarbeiten von über die Schnittstelle zum Anschließen der wenigstens einen Eingabeeinrichtung empfangenen Steuersignalen.

Der Erfindung liegt die Erkenntnis zugrunde, dass ein möglichst flächendeckend nutzbarer Internetzugang insbesondere in den wirtschaftlich aufstrebenden Ländern, in denen eine leitungsgebundene Dateninfrastruktur zur Versorgung von privaten Haushalten mit einem Internetanschluss weniger gut oder zumindest nicht flächendeckend ausgebildet ist, durch Nutzung eines vorzugsweise gut ausgebauten Mobilfunknetzes realisierbar ist. Des Weiteren liegt der Erfindung der Gedanke zugrunde, dass ein Internetzugang unter Einbeziehung vorhandener Ressourcen am kostengünstigsten zu realisieren ist. Insofern wird die Erkenntnis genutzt, dass in den privaten Haushalten zumeist Fernsehgeräte vorhanden sind, welche erfindungsgemäß als Wiedergabeeinrichtung zur optischen und/oder akustischen Wiedergabe von Internetinhalten vorgesehen sind. Ferner liegt der Erfindung die Erkenntnis zugrunde, dass abweichend von der üblichen Verwendung einer dem Trend zu einer Entwicklung mit immer mehr Leistung und Funktionsumfang folgenden Recheneinrichtung zur Bereitstellung eines Internetzugangs und zur Verarbeitung von über das Internet empfangenen und/oder über das Internet zu sendende Daten, eine hinsichtlich der Nutzung von Internetdaten durch einen Internetnutzer und der graphischen Wiedergabe von Internetinhalten auf einem Fernsehgerät funktionsmäßig spezialisierte erfindungsgemäße Vorrichtung kostengünstig fertigbar ist.

Bei einer derartigen erfindungsgemäßen Vorrichtung umfassen die Mittel zum Aufbau einer Internetverbindung und die Mittel zum Verarbeiten der über das Mobilfunknetz empfangenen Internetdaten vorzugsweise wenigstens eine Recheneinheit, wenigstens eine Steuereinheit, wenigstens eine Buseinheit, wenigstens eine Speichereinheit und/oder wenigstens ein Modem. Ein in die Vorrichtung integriertes Modem ist dabei vorteilhafterweise wenigstens zur Nutzung von GPRS (GPRS: General Packet Radio Service) ausgebildet. Für eine entsprechende Realisierung einer erfindungsgemäßen Vorrichtung mit integriertem, GPRS unterstützendem Modem kommt vorzugsweise ein Chipset von dem Hersteller Infineon (Infineon XMM1160 oder Infineon XMM2130) oder von dem Hersteller MediaTek (MTK 6225 oder MTK 6238) in Frage, insbesondere da unter Verwendung dieser oder vergleichbarer Chipsets eine kostengünstige, der geforderten Funktionalität der erfindungsgemäßen Vorrichtung genügende Fertigung der Vorrichtung realisierbar ist. Es können aber erfindungsgemäß auch andere geeignete Chipsets anderer Hersteller Verwendung finden.

Gegenüber herkömmlichen Vorrichtungen zur Bereitstellungen eines Internetzugangs wird erfindungsgemäß insbesondere darauf verzichtet, die Vorrichtung mit einer eigenen Wiedergabeeinrichtung zur graphischen Darstellung von Internetinhalten auszustatten. Des Weiteren sind die Mittel zum Senden und/oder Empfangen von elektronischen Daten, insbesondere Internetdaten, über ein Mobilfunknetz, die Mittel zur elektronischen Datenverarbeitung und die Mittel zum Verarbeiten von über die Schnittstelle zum Anschließen der wenigstens einen Eingabeeinrichtung empfangenen Steuersignalen für die Bereitstellung eines Internetzugangs für wenigstens eine externe Wiedergabeeinrichtung und für die Verarbeitung von über das Internet empfangenen und/oder über das Internet zu sendende Daten, optimiert. Andere Funktionalitäten treten dabei in den Hintergrund. Insbesondere ist erfindungsgemäß keine Verwendung hochpreisiger Hardware mit umfangreichem Funktionsumfang, die beispielsweise in Laptops oder Netbooks eingesetzt wird, vorgesehen.

Vielmehr sieht eine besonders bevorzugte Ausgestaltung der erfindungsgemäßen Vorrichtung vor, dass die Mittel zum Senden und/oder Empfangen von elektronischen Daten über das Mobilfunknetz und die Mittel zur elektronischen Datenverarbeitung vorteilhafterweise wenigstens einen Baseband Prozessor umfassen. Zum verbesserten Empfang von Daten über das Mobilfunknetz weist eine vorteilhafte Ausgestaltung der erfindungsgemäßen Vorrichtung wenigstens eine Antenne auf. Um eine bessere Empfangsqualität zu erreichen, ist bei einer Ausführungsvariante die wenigstens eine Antenne als externe Antenne ausgeführt. Aus Kostengründen ist bei einer bevorzugten Ausführungsvariante der erfindungsgemäßen Vorrichtung die wenigstens eine Antenne als interne Antenne ausgestaltet. Die wenigstens eine interne Antenne kann vorteilhafterweise aufgrund der im Vergleich zu einem Mobilfunktelefon weniger stark limitierten Platzverhältnisse innerhalb des Gehäuses anders ausgeführt werden als bei einem Mobilfunktelefon, wodurch gegenüber einem Mobilfunktelefon eine Empfangsverbesserung realisierbar ist.

Eine weitere insbesondere hinsichtlich der Kosten für die erfindungsgemäße Vorrichtung vorteilhafte Ausführungsvariante sieht vor, dass die Vorrichtung lediglich den GSM-Standard und die mittels des GSM-Standards nutzbaren Datendienste GPRS und E-GPRS (Enhanced GPRS) unterstützt. Vorteilhafterweise sind hierdurch keine zusätzlichen Antennen zur Nutzung von Mobilfunknetzstandards wie UMTS und/oder dergleichen anderen Mobilfunknetzstandards erforderlich.

Da die erfindungsgemäße Vorrichtung vorzugsweise für einen stationären Betrieb vorgesehen ist, weist eine vorteilhafte Ausgestaltung der Vorrichtung vorteilhafterweise einen Anschluss für eine externe Energieversorgung auf. Eine Ausführungsvariante der Erfindung sieht ferner zumindest eine Backup-Batterie oder einen Backup-Akkumulator vor. Vorteilhafterweise ist durch zusätzliche Nutzung einer Batterie beziehungsweise einen Akkumulator ein unterbrechungsfreier Betrieb der Vorrichtung auch in Regionen möglich, in denen eine Spannungsversorgung nicht permanent sichergestellt ist. Eine weitere vorteilhafte Ausführungsvariante der erfindungsgemäßen Vorrichtung sieht Mittel zum Schutz vor Überspannungen vor, wodurch beim Betrieb der Vorrichtung über das Stromnetz die Gefahr einer Beschädigung der Vorrichtung durch starke Schwankungen im Versorgungsnetz vorteilhafterweise verringert beziehungsweise verhindert ist.

Des Weiteren ist bei einer weiteren vorteilhaften Ausgestaltung der Erfindung zumindest eine der Schnittstellen zum Anschließen von externen Geräten durch ein serielles Bussystem realisiert, vorzugsweise USB (USB: Universal Serial Bus) oder Firewire. Vorteilhafterweise werden angeschlossene Geräte hierbei automatisch erkannt und sind direkt nach Anschluss des jeweiligen Gerätes nutzbar. Insbesondere zum Anschließen einer Tastatur und/oder einem Zeigegerät, wie einer Computermaus, als Eingabeeinrichtung kann aber auch beispielsweise eine PS/2-Schnittstelle als Schnittstelle zum Anschließen der Eingabeeinrichtung vorgesehen werden, insbesondere wenn mit derartigen Schnittstellen ausgestattete Eingabeeinrichtungen in dem jeweiligen Vertriebsland verbreiteter beziehungsweise kostengünstiger sind. Eine weitere vorteilhafte Ausgestaltung der erfindungsgemäßen Vorrichtung sieht eine Schnittstelle zur Nutzung von Speicherkarten, wie CompactFlash (CF), SD-Memory-Card, Multimedia Card (MMC) und/oder der gleichen Speichermedien vor. Für eine exklusivere Ausführung der erfindungsgemäßen Vorrichtung ist ferner wenigstens eine drahtlose Schnittstelle zum Anschließen externer Geräte, vorzugsweise eine Bluetooth- und/oder Infrarotschnittstelle, vorgesehen. Bei Verwendung einer Infrarotschnittstelle ist vorteilhafterweise auch eine zu einem Fernseher gehörenden Fernbedienung zumindest teilweise als Eingabeeinrichtung nutzbar, wodurch Kosten vorteilhafterweise weiter senkbar sind und eine Bedienung der Vorrichtung vorteilhafterweise vereinfachbar ist. Eine weitere vorteilhafte Ausgestaltung der erfindungsgemäßen Vorrichtung weist zudem wenigstens eine Schnittstelle, vorzugsweise eine USB-Schnittstelle, zum Anschließen eines Massenspeichermediums auf, sodass über das Internet empfangene Daten bei Bedarf gespeichert werden können, mitunter auch dauerhaft.

Eine weitere besonders bevorzugte Ausgestaltung der erfindungsgemäßen Vorrichtung sieht vor, dass die Mittel zum Senden und/oder Empfangen von elektronischen Daten über das Mobilfunknetz wenigstens ein Teilnehmeridentifikationsmodul (SIM, SIM: Subscriber Identity Module) umfassen. Das Teilnehmeridentifikationsmodul ist dabei vorzugsweise als vorteilhafterweise austauschbare SIM-Karte ausgebildet. Vorteilhafterweise ist hierdurch eine besonders einfache Abrechnungsweise für kostenpflichtige Internetdienste seitens des Mobilfunknetzbetreibers gegeben. Eine bevorzugte Ausgestaltung der erfindungsgemäßen Vorrichtung sieht die Verwendung von sogenannten Prepaidkarten vor. Eine vorteilhafte Ausführungsvariante weist dabei eine Funktionstaste zum Abruf eines verbleibenden Guthabens auf, das bei Abruf auf dem angeschlossenen Wiedergabegerät numerisch und/oder graphisch darstellbar ist. Die Funktionstaste ist dabei vorzugsweise als sogenannter Softkey ausgebildet und über ein Bedienmenü mittels einer an der erfindungsgemäßen Vorrichtung angeschlossenen Eingabeeinrichtung auf dem externen Wiedergabegerät auswählbar. Zur Aufnahme eines Teilnehmeridentifikationsmoduls, vorzugsweise einer SIM-Karte, weist eine Ausführungsvariante der erfindungsgemäßen Vorrichtung vorteilhafterweise einen von außen zugänglichen Einschub auf. Eine weitere Ausführungsvariante der erfindungsgemäßen Vorrichtung weist zudem eine sogenannte SIM-Lock-Funktionalität auf, wodurch die Vorrichtung nur mit der SIM-Karte eines bestimmten Mobilfunknetzbetreibers betreibbar ist.

In einer weiteren Ausführungsvariante der erfindungsgemäßen Vorrichtung ist die Vorrichtung vorteilhafterweise ausgebildet, lediglich bei jedem Einschaltvorgang der Vorrichtung und/oder durch entsprechende Aufforderung durch den Nutzer im Rahmen der Einbuchung in ein Mobilfunknetz und/oder zur Auswahl einer geeigneten Funkzelle eine Messung hinsichtlich der Signalempfangsstärke und/oder der Signalqualität durchzuführen. Hierdurch können vorteilhafterweise ständig durchzuführende Messungen, wie die der Signalstärke und Signalqualität der aktuellen Funkzelle, und damit verbundene Programmroutinen, die insbesondere bei einem Mobilfunktelefon für ein sogenanntes Handover obligatorisch sind, entfallen.

In einer weiteren vorteilhaften Ausgestaltung der Erfindung ist die Vorrichtung ausgebildet, eine Übertragung von Internetdaten mittels GPRS (GPRS: General Packet Radio Service), EDGE (EDGE: Enhanced Data Rates for GSM Evolution), UMTS (UMTS: Universal Mobile Telecommunications System), CDMA2000 (CDMA: Code Division Multiple Access) und/oder HSDPA (HSDPA: High Speed Downlink Packet Access) zu unterstützen. Durch Verwendung derartiger Übertragungsstandards lassen sich vorteilhafterweise vergleichsweise hohe Datenübertragungsraten realisieren, wodurch vorteilhafterweise das Nutzungserlebnis bei der Nutzung von Internetinhalten erhöht wird.

Eine besonders bevorzugte Ausgestaltung der erfindungsgemäßen Vorrichtung ist gekennzeichnet durch ein Betriebssystem, vorzugsweise ein Echtzeitbetriebssystem (RTOS, RTOS: real-time operating system), insbesondere zur Verwaltung der Hardware der Vorrichtung und/oder zur Steuerung der Datenverarbeitung. Ein Echtzeitbetriebssystem wie beispielsweise Nucleus lässt sich vorteilhafterweise optimal an weniger aufwendige, kostengünstige Hardware anpassen und stellt vorteilhafterweise selbst wenig Anforderungen an die verwendete Hardware und ist dabei besonders ressourcenschonend auslegbar. In einer exklusiveren mit aufwendigerer Hardware ausgestatteten Ausführungsvariante der Erfindung ist allerdings auch die Verwendung von Betriebssystemen wie Android, Windows CE oder Symbian denkbar, wodurch ein größerer Anwendungsumfang der erfindungsgemäßen Vorrichtung realisierbar ist. In einer weiteren bevorzugten Ausgestaltung weist die Vorrichtung eine Java virtuelle Maschine (JVM) auf. Hierdurch sind vorteilhafterweise sogenannte Applets mit der Vorrichtung nutzbar. Insbesondere ermöglicht eine JVM die Nutzung eines Java-basierten Browsers, wie Opera Mini, zur Darstellung von Internetinhalten seitens der erfindungsgemäßen Vorrichtung. Eine weitere Ausgestaltung sieht die Verwendung einer sogenannten Dalvik Virtual Machine vor, die Bestandteil des Android OS ist, wodurch vorteilhafterweise der sogenannte Android Browser mit der erfindungsgemäßen Vorrichtung nutzbar ist.

Eine weitere bevorzugte Ausführungsvariante sieht vor, dass die Vorrichtung einen integrierten Browser aufweist, insbesondere einen MIDP-kompatiblen Browser (MIDP: Mobile Information Device Profile), wie Opera Mini. Der Browser unterstützt vorteilhafterweise das Wireless Application Protocol (WAP), wodurch Internetinhalte auch bei langsamerer Übertragungsrate und längeren Antwortzeiten eines genutzten Mobilfunknetzes vorteilhafterweise schneller darstellbar sind. Vorteilhafterweise komprimiert der mit der Vorrichtung genutzte Browser den Datenverkehr, wodurch sich weitere Geschwindigkeitsvorteile bei der Datenübertragung sowie bei der Darstellung von Internetinhalten ergeben. Vorteilhafterweise unterstützt der Browser ein sogenanntes Pre-Rendering, welches auf einem Server durchgeführt wird, wodurch der Ressourcenbedarf seitens der Vorrichtung vorteilhafterweise gering bleibt. Durch diese Browsereigenschaften wird das Nutzungserlebnis für Nutzer von Internetinhalten vorteilhafterweise weiter positiv gesteigert. Des Weiteren sind durch Nutzung des WAP die Internetinhalte an eine relativ geringe Auflösung besser anpassbar. Das ist besonders vorteilhaft, da durch die Bereitstellung eines Ausgangssignals mit vergleichsweise geringer Auflösung weiter Kosten reduzierbar sind. Zur weiteren Steigerung des Nutzungserlebnisses für Nutzer von Internetinhalten sieht eine weitere Ausgestaltung der vorliegenden Erfindung ein sogenanntes Buffern von Internetinhalten zur verzögerungsärmeren beziehungsweise verzögerungsfreien Darstellung und/oder Wiedergabe von Internetinhalten vor, insbesondere beim Abspielen von Audio- und/oder Videosequenzen. In einer bevorzugten Ausführungsvariante der Vorrichtung nutzt die Vorrichtung hierzu ein Verfahren zur Übertragung von Daten von wenigstens einer zur Übertragung vorgesehene Daten bereithaltenden Datenbank auf ein in einem Mobilfunknetz betreibbaren Endgerät in Mobilfunknetzen, wobei seitens des Endgerätes Daten bereitgehalten werden, welche wenigstens einem Teil von seitens der Datenbank bereitgehaltenen Daten entsprechen, eine Verknüpfung zu Daten der Datenbank angezeigt wird, bei Auswahl der angezeigten Verknüpfung entsprechend verknüpfte Daten über das Mobilfunknetz empfangen werden und bei Auswahl der angezeigten Verknüpfung Daten entsprechend der Verknüpfung wiedergegeben werden, wobei bei dem mit der Auswahl der angezeigten Verknüpfung eine Anfrage nach Daten entsprechend der Verknüpfung an das Endgerät und an die Datenbank gerichtet wird, bei Vorhandensein von Daten entsprechend der Verknüpfung seitens des Endgerätes zunächst der wenigstens eine Teil von Daten der den seitens der Datenbank bereitgehaltenen Daten entspricht wiedergegeben wird und anschließend die über das Mobilfunknetz empfangenen Daten entsprechend der Verknüpfung synchronisiert mit den seitens des Endgerätes bereitgehaltenen Daten entsprechend der Verknüpfung wiedergegeben werden.

Eine weitere vorteilhafte Ausgestaltung der erfindungsgemäßen Vorrichtung ist gekennzeichnet durch S-Video, Composite, Component, RGB und/oder VGA als Schnittstelle zum Anschließen wenigstens einer externen Wiedergabeeinrichtung, wobei S-Video und/oder RGB besonders bevorzugt werden, da S-Video und RGB vergleichsweise stark verbreitet sind. Zudem bieten S-Video sowie RGB vergleichsweise kostengünstig eine relativ gute Wiedergabequalität. Ein Anschluss einer Wiedergabeeinrichtung an die Schnittstelle der erfindungsgemäßen Vorrichtung kann dabei insbesondere mittels Cinch-Steckern, Scart- und/oder VHF- beziehungsweise UHF-Steckverbindern oder dergleichen geeigneter Verbindungen erfolgen. Obwohl aus Kostengründen im Allgemeinen weniger vorteilhaft ist auch eine Ausführungsvariante mit wenigstens einer Schnittstelle gemäß einem digitalen Standard, wie DVI (Digital Visual Interface) oder HDMI (High Definition Multimedia Interface) realisierbar.

Eine Ausführungsvariante der erfindungsgemäßen Vorrichtung weist wenigstens einen Kodierer (Encoder) auf, welcher ausgebildet ist, das Ausgangssignal entsprechend eines von der wenigstens einen Wiedergabeeinrichtung unterstützten Wiedergabeformates an der wenigstens einen Schnittstelle zum Anschließen der wenigstens einen Wiedergabeeinrichtung bereitzustellen. Eine vorteilhafte Ausgestaltung der Erfindung sieht vor, dass nach dem Encoding ein sogenanntes Upscaling (Hochskalierung) durchgeführt wird. Hierbei wird die Ursprungsauflösung auf eine höhere Bildauflösung hochgerechnet und fehlende Bildpunkte werden interpoliert. Die Vorrichtung unterstützt dabei vorteilhafterweise Verfahren zur Farbübertragung beim Fernsehen, insbesondere gemäß PAL (PAL: Phase Alternating Line) und/oder NTSC (NTSC: National Television Systems Committee). Vorteilhafterweise unterstützt das von der erfindungsgemäßen Vorrichtung bereitgestellte Ausgangssignal eine typische Bildauflösung für Fernsehgeräte (768 x 576 Bildpunkte für PAL, 720 x 480 Bildpunkte für NTSC). Des Weiteren ist vorgesehen, dass in einer weiteren vorteilhaften Ausführungsvariante das von der erfindungsgemäßen Vorrichtung bereitgestellte Ausgangssignal auch Bildauflösungen gemäß der verbreiteten VGA- und/oder XGA-Standards, insbesondere QVGA (320 x 240), HVGA (480 x 320), VGA (640 x 480), SVGA (800 x 600) und/oder WVGA (854 x 480), bereitstellt, wobei die Auflösungen von den oben genannten Werten zumindest geringfügig abweichen können. Eine höhere Auflösung steigert im Allgemeinen das Nutzererlebnis, geht aber zumeist mit höheren Kosten einher. Insofern wird eine Auflösung in HVGA (480 x 320) als geeignete kostengünstige Lösung angesehen.

In einer weiteren Ausführungsvariante der Erfindung ist an eine USB-Schnittstelle der Vorrichtung ein externer Videochip, beispielsweise von DisplayLink, angeschlossen, der das Ausgangssignal zur Ausgabe auf einer externen Wiedergabeeinrichtung aufbereitet. In einer bevorzugten Ausgestaltung dieser Ausführungsvariante werden alle Bildinformationen an den über USB angeschlossenen Videochip, beispielsweise einen geeigneten DisplayLink Chip, bereitgestellt, der dann für das Encoding und die Wiedergabe auf der Wiedergabeeinrichtung, vorzugsweise einem Fernsehgerät, zuständig ist. Die Ausführung erfolgt vorzugsweise über ein Kabel, das den Videochip beinhaltet und zu einer Seite einen USB-Steckverbinder und zu der anderen Seite einen für die Wiedergabeeinrichtung geeigneten Anschluss, beispielsweise einen S-Video-Stecker, aufweist.

In einer weiteren besonders vorteilhaften Ausführungsvariante der erfindungsgemäßen Vorrichtung ist die Vorrichtung nach Art einer Set-Top-Box ausgebildet, die vorzugsweise auf oder zumindest nahe bei der externen Wiedergabeeinrichtung platzierbar ist. Die erfindungsgemäße Vorrichtung weist dabei vorzugsweise ein im Wesentlichen geschlossenes Gehäuse auf, wobei die Schnittstellen, insbesondere die wenigstens eine Schnittstelle zum Anschließen wenigstens einer Eingabeeinrichtung und die wenigstens eine Schnittstelle zum Anschließen wenigstens einer Wiedergabeeinrichtung von außen zugänglich sind. Des Weiteren weist die erfindungsgemäße Vorrichtung vorteilhafterweise wenigstens ein Bedienelement, vorzugsweise in Form eines Wipp-, Kipp- oder Rastschalters, auf, mittels dem die Vorrichtung in den Betriebszustand versetzbar ist. Ferner verfügt die Vorrichtung vorzugsweise über wenigstens ein Signalisierungselement, vorzugsweise in Form einer LED (LED: Light Emitting Diode), welches den Betriebszustand der Vorrichtung signalisiert und den Nutzer insbesondere darüber informiert, ob die Vorrichtung online ist, das heißt ob kostenpflichtige Internetdienste in Anspruch genommen werden. Auf diese Weise ist vorteilhafterweise vermeidbar, dass insbesondere bei zeitbasierter Abrechnung der Nutzung von Internetdiensten quasi unbemerkt Kosten entstehen, wenn die erfindungsgemäße Vorrichtung nicht genutzt wird. Eine weitere vorteilhafte Ausgestaltung der Erfindung sieht zudem vor, dass die Vorrichtung vorteilhafterweise keine Internetdaten über das Mobilfunknetz sendet und/oder empfängt, wenn keine Eingabeeinrichtungen und/oder keine Wiedergabeeinrichtung angeschlossen sind und/oder die Wiedergabeeinrichtung nicht im Betriebszustand ist. Vorzugsweise ist diese Funktionalität durch den Nutzer deaktivierbar, insbesondere vor Durchführung umfangreicher Downloads, die beispielsweise über Nacht erfolgen sollen.

Eine weitere Ausführungsvariante der erfindungsgemäßen Vorrichtung ist zum Aufbau einer Telekommunikationsverbindung ausgebildet. Der Aufbau der Telekommunikationsverbindung erfolgt dabei vorteilhafterweise über ein Mobilfunknetz. Vorzugsweise ist die erfindungsgemäße Vorrichtung ferner ausgebildet, ein durch den Nutzer bedienbares Eingabemenü zur Darstellung seitens der externen Wiedergabeeinrichtung bereitzustellen. Über dieses Eingabemenü kann der Nutzer vorteilhafterweise unter Verwendung der wenigstens einen an der Vorrichtung angeschlossenen Eingabeeinrichtung die gewünschte Funktion der Vorrichtung beziehungsweise den gewünschten seitens der Vorrichtung zur Nutzung angebotenen Dienst, insbesondere Internetdienste und/oder Telekommunikationsfunktionen der Vorrichtung, auswählen. In einer weiteren Ausführungsvariante weist die erfindungsgemäße Vorrichtung ein vorzugsweise in die Vorrichtung integriertes, für Telekommunikationszwecke nutzbares Mikrofon auf. Die Audioausgabe, insbesondere die Sprachausgabe, erfolgt vorteilhafterweise über die wenigstens eine externe Wiedergabeeinrichtung, vorzugsweise ein Fernsehgerät. Ferner ist eine Ausführungsvariante vorgesehen, bei der die Sprachausgabe über einen in die erfindungsgemäße Vorrichtung integrierten Lautsprecher, beispielsweise einen einfachen sogenannten Handsfree Speaker, erfolgt.

Eine weitere vorteilhafte Ausgestaltung der Vorrichtung weist zudem wenigstens eine Schnittstelle zum Anschließen einer insbesondere für Telekommunikationszwecke verwendbaren Einrichtung zum Erfassen von gesprochener Sprache auf. Vorzugsweise ist die Schnittstelle als Klinkenbuchse ausgebildet. An die Schnittstelle ist vorzugsweise ein Head-Set anschließbar, wodurch der Komfort bei der Telekommunikation vorteilhafterweise erhöht wird. In einer exklusiveren Ausführungsvariante der erfindungsgemäßen Vorrichtung ist zudem vorgesehen, dass die Vorrichtung einen Telefonhörer aufweist. Hierbei ist sowohl eine Ausführungsvariante vorgesehen, bei der der Telefonhörer über ein Kabel mit der Vorrichtung verbunden ist, als auch eine kabellose Ausführungsvariante, vorzugsweise gemäß dem DECT-Standard (DECT: Digital Enhanced Cordless Telecommunications). Die Eingabe einer Rufnummer erfolgt vorteilhafterweise unter Verwendung wenigstens einer angeschlossenen Eingabeeinrichtung, wobei in der Ausführungsvariante der Vorrichtung, die einen Telefonhörer aufweist, der Telefonhörer vorzugsweise gleichsam eine Eingabeeinrichtung bereitstellt, vorzugsweise in Form eines in den Telefonhörer eingelassenen Tastenfeldes. In einer weiteren Ausgestaltung einer exklusiveren Variante der erfindungsgemäßen Vorrichtung ist diese zur Unterstützung von Videotelefonie ausgebildet, wobei das empfangene Videosignal wenigstens eines Gesprächspartners auf der wenigstens einen Wiedergabeeinrichtung darstellbar ist.

In einer weiteren vorteilhaften Ausgestaltung der erfindungsgemäßen Vorrichtung weist die Vorrichtung eine sogenannte Telefonbuchfunktionalität auf, wobei eine seitens der Vorrichtung bereitgestellte Programmanwendung insbesondere das Eingeben, Speichern und Aufrufen von Kontaktinformationen von anderen Personen unterstützt.

Eine weitere Ausführungsvariante der erfindungsgemäßen Vorrichtung ist gekennzeichnet durch wenigstens eine Schnittstelle zum Anschließen eines sogenannten Festnetztelefons, wobei die Vorrichtung vorzugsweise Mittel zur Signalumwandlung aufweist, vorzugsweise derart, dass mittels des Festnetztelefons eine Telekommunikationsverbindung über das Mobilfunknetz herstellbar ist.

Eine weitere vorteilhafte Ausgestaltung der erfindungsgemäßen Vorrichtung ist zur Nutzung wenigstens eines Nachrichtendienstes des Mobilfunknetzes, vorzugsweise SMS (SMS: Short Message Service) und/oder MMS (MMS: Multimedia Messaging Service), ausgebildet. Dabei unterstützt vorteilhafterweise eine seitens der Vorrichtung bereitgestellte Programmanwendung das Erstellen von Textnachrichten zum Versenden mittels eines Nachrichtendienstes des Mobilfunknetzes. Die Texteingabe erfolgt vorzugsweise unter Verwendung einer an der Vorrichtung angeschlossenen Eingabeeinrichtung.

Bei einer weiteren vorteilhaften Ausgestaltung der Vorrichtung werden zumindest die Mittel zum Senden und/oder Empfangen von elektronischen Daten und/oder die Mittel zur elektronischen Datenverarbeitung zumindest teilweise durch ein in dem Mobilfunknetz betreibbares mobiles Endgerät, vorzugsweise ein Mobilfunktelefon oder ein Datenstick, bereitgestellt, wobei das mobile Endgerät über eine Schnittstelle mit der erfindungsgemäßen Vorrichtung verbindbar ist. Hierdurch lassen sich vorteilhafterweise weitere vorhandene Ressourcen bei der Bereitstellung eines Interzugangs für wenigstens eine externe Wiedergabeeinrichtung nutzen und somit weiter Kosten reduzieren, da die erfindungsgemäße Vorrichtung bei einer derartigen Ausführungsvariante ohne eigenen Baseband Prozessor auskommt. Als Ausführungsvarianten sind sowohl eine leitungsgebundene Schnittstelle als auch eine Funkschnittstelle, vorzugsweise eine Bluetooth-Schnittstelle, vorgesehen. Vorteilhafterweise ist die Tastatur des mobilen Endgerätes als Eingabeeinrichtung zur Verwendung mit der erfindungsgemäßen Vorrichtung nutzbar, wodurch weiter Kosten reduziert werden. Ein alternativ vorgesehener Daten- oder Surfstick ist vorteilhafterweise über eine USB-Schnittstelle an die Vorrichtung anschließbar. Ferner ist in einer weiteren Ausgestaltung der Erfindung die Verwendung einer UMTS-Datenkarte vorgesehen.

Eine bevorzugte Ausführungsvariante sieht vor, dass die erfindungsgemäße Vorrichtung zur Aufnahme des mobilen Endgerätes nach Art einer Ladestation für das mobile Endgerät ausgebildet ist.

Eine weitere vorteilhafte Ausgestaltung der Erfindung sieht vor, dass die Vorrichtung nach Art einer Eingabeeinrichtung ausgebildet ist, wobei die Eingabeeinrichtung vorzugsweise wenigstens eine Tastatur aufweist. Hierdurch ist vorteilhafterweise lediglich die externe Wiedergabeeinrichtung an die Vorrichtung anzuschließen, wodurch vorteilhafterweise weniger Anschlusskabel notwendig sind und kein Platz für zusätzliche Eingabeeinrichtungen benötigt wird. Vorzugsweise weist die Eingabeeinrichtung des Weiteren ein Zeigegerät auf, vorzugsweise ein Touchpad, einen Trackball und/oder einen Kippschalter nach Art eines Joysticks. Vorteilhafterweise wird ein in vier Richtungen bewegbarer Kippschalter von Opera Mini als Java-basiertem Browser unterstützt. Durch die Integration eines Zeigegerätes in die Eingabeeinrichtung ist die Eingabeeinrichtung vorteilhafterweise flexibler anwendbar. Insbesondere bedarf es keiner Auflagefläche, beispielsweise für die Bedienung einer Computermaus. Stattdessen ist die erfindungsgemäße Vorrichtung nach Art einer Eingabeeinrichtung bequem, beispielsweise vom Schoß des Nutzers aus, bedienbar.

Weitere Einzelheiten, Merkmale und Vorteile der Erfindung werden nachfolgend anhand der in den Figuren der Zeichnung dargestellten Ausführungsbeispielen näher erläutert. Dabei zeigen:
- Fig. 1: in einer perspektivischen Darstellung ein Ausführungsbeispiel für eine erfindungsgemäße Vorrichtung,
- Fig. 2: ein Blockschaltbild zur schematischen Darstellung von Bestandteilen eines Ausführungsbeispiels einer erfindungsgemäßen Vorrichtung,
- Fig. 3: ein Blockschaltbild zur schematischen Darstellung von Bestandteilen eines weiteren Ausführungsbeispiels einer erfindungsgemäßen Vorrichtung,
- Fig. 4: ein Blockschaltbild zur schematischen Darstellung von Bestandteilen eines weiteren Ausführungsbeispiels einer erfindungsgemäßen Vorrichtung,
- Fig. 5: in einer schematischen Prinzipdarstellung ein Ausführungsbeispiel für eine Inbetriebnahme einer erfindungsgemäßen Vorrichtung,
- Fig. 6: eine schematische Prinzipdarstellung eines Ausführungsbeispiels einer erfindungsgemäßen Vorrichtung im Gebrauchszustand,
- Fig. 7: eine schematische Prinzipdarstellung eines Ausführungsbeispiels einer erfindungsgemäßen Vorrichtung mit Telefonfunktion und angeschlossenem Telefonhörer,
- Fig.8: eine schematische Prinzipdarstellung eines weiteren Ausführungsbeispiels einer erfindungsgemäßen Vorrichtung,
- Fig. 9: in einer perspektivischen Darstellung ein weiteres Ausführungsbeispiel einer erfindungsgemäßen Vorrichtung,
- Fig.10a bis Fig. 10f: jeweils in einer schematischen Prinzipdarstellung ein weiteres Ausführungsbeispiel einer erfindungsgemäßen Vorrichtung im Gebrauchszustand und
- Fig.11: in einer schematischen Prinzipdarstellung ein erfindungsgemäßes Verfahren zur Bereitstellung eines Internetzugangs für wenigstens eine externe Wiedergabeeinrichtung und zur Verarbeitung von über das Internet empfangenen und/oder über das Internet zu sendende Daten mit einer erfindungsgemäßen Vorrichtung.

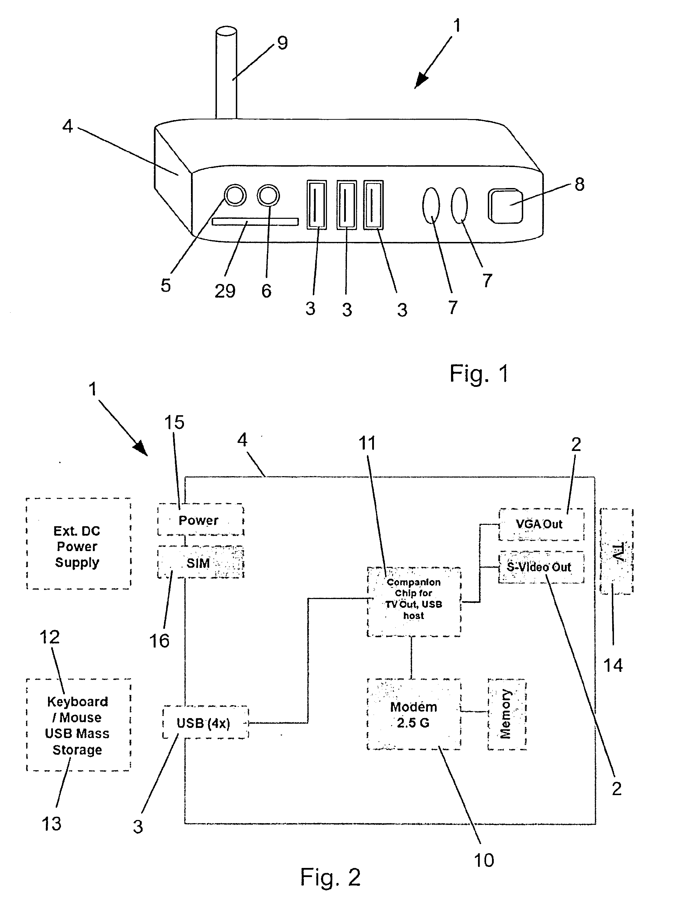

In Fig. 1 ist ein Ausführungsbeispiel einer erfindungsgemäßen Vorrichtung 1 zur Bereitstellung eines Internetzugangs für wenigstens eine externe Wiedergabeeinrichtung, vorzugsweise ein Fernsehgerät, und zur Verarbeitung von über das Internet empfangenen und/oder über das Internet zu sendende Daten dargestellt. Bei der Vorrichtung 1 werden die verarbeiteten Daten zumindest teilweise als Ausgangssignal, insbesondere als Video und/oder Audiosignal, zur Nutzung mittels der wenigstens einen Wiedergabeeinrichtung an wenigstens einer Schnittstelle 2 der Vorrichtung 1 (die Schnittstelle 2 ist in der Fig. 1 nicht explizit dargestellt) bereit gestellt. Die Vorrichtung 1 weist Mittel zum Senden und/oder Empfangen von elektronischen Daten, insbesondere Internetdaten, über ein Mobilfunknetz, vorzugsweise ein Mobilfunknetz gemäß einem GSM-, UMTS- und/oder LTE-Mobilfunkstandard, Mittel zur elektronischen Datenverarbeitung, wenigstens eine Schnittstelle 3 zum Anschließen wenigstens einer Eingabeeinrichtung sowie Mittel zum Verarbeiten von über die Schnittstelle 3 zum Anschließen der wenigstens einen Eingabeeinrichtung empfangenen Steuersignalen auf.

Die Vorrichtung 1 ist nach Art einer Set-Top-Box ausgebildet und weist ein im Wesentlichen geschlossenes Gehäuse 4 auf, wobei die Schnittstellen, insbesondere die wenigstens eine Schnittstelle 2 zum Anschließen wenigstens einer Eingabeeinrichtung und die wenigstens eine Schnittstelle 3 zum Anschließen wenigstens einer Wiedergabeeinrichtung von außen zugänglich sind. Als Schnittstelle 2 zum Anschließen einer externen Wiedergabeeinrichtung, vorliegend vorzugsweise ein Fernsehgerät, weist die Vorrichtung 1 eine in der Rückseite der Vorrichtung 1 eingelassene sogenannte Mini-DIN-S-Videobuchse auf, über die vorliegend ein Videosignal mit einer Auflösung von 800 x 600 Bildpunkten bereitgestellt wird. Eine Auflösung von 800 x 600 Bildpunkten ist vorteilhafterweise mit geringen Qualitätsverlusten insbesondere mit einem Fernseher als Wiedergabeeinrichtung umsetzbar, weil die Auflösung nahe an der PAL-Auflösung liegt. Aus Kostengründen wäre allerdings eine HVGA-Auflösung gegenüber einer Auflösung von 800 x 600 Bildpunkten vorzuziehen.

Des Weiteren weist die Vorrichtung 1 an der Frontseite drei USB-Anschlüsse 3 auf, wobei wenigstens ein USB-Anschluss zum Anschließen eines Massenspeichermediums vorgesehen ist und wenigstens ein USB-Anschluss als Schnittstelle 3 zum Anschließen wenigstens einer Eingabeeinrichtung vorgesehen ist. Statt eines Massenspeichermediums kann über den USB-Anschluss aber bei Bedarf auch ein weiteres Eingabegerät angeschlossen werden. Die Vorrichtung 1 weist zudem eine Schnittstelle zum Anschluss einer Speicherkarte auf, vorliegend einer SD-Memory-Card, welche in den Kartenschacht 29 zum Anschließen an die Schnittstelle einbringbar ist. Zudem weist die Vorrichtung 1 an der Frontseite eine Schnittstelle 5 zum Anschließen einer Audioeingabeeinrichtung, vorzugsweise eines Mikrofons, und eine Schnittstelle 6 zum Anschließen einer Audioausgabeeinrichtung, vorzugsweise von Kopfhörern, auf, wobei die beiden Schnittstellen 5, 6 jeweils als 3,5 mm-Klinkenbuchse ausgebildet sind.

Vorteilhafterweise ist die Vorrichtung 1 zum Aufbau einer Telekommunikationsverbindung ausgebildet, wobei ein Nutzer für die Kommunikation beispielsweise ein über die Klinkenbuchsen 5 und 6 angeschlossenes Headset nutzen kann. Die Telekommunikationsverbindung kann dabei je nach Vorgabe des Nutzers direkt über das Mobilfunknetz oder mittels Voice-over-IP hergestellt werden. Zwei in die Front der Vorrichtung 1 eingelassene LEDs 7 informieren den Nutzer vorteilhafterweise über den jeweiligen Betriebszustand der Vorrichtung 1. Über ein als Rastschalter ausgebildetes Bedienelement 8 ist die Vorrichtung 1 ein- beziehungsweise ausschaltbar. An der Rückseite weist die Vorrichtung 1 eine externe zumindest teilweise beweglich anordbare Antenne 9 auf, wobei die Antenne 9 vorteilhafterweise für das Senden und/oder Empfangen von Daten in unterschiedlichen Frequenzbändern, vorliegend insbesondere 900 MHz und/oder 1800 MHz ausgebildet ist.

In Fig. 2 ist ein Ausführungsbeispiel einer erfindungsgemäßen Vorrichtung 1 in Form eines Blockschaltbildes dargestellt. Die durchgezogene Linie mit dem Bezugszeichen 4 stellt dabei das Gehäuse der Vorrichtung 1 dar. Die Mittel zum Senden und/oder Empfangen von elektronischen Daten, insbesondere Internetdaten, umfassen ein Funkmodem 10, welches ausgebildet ist, den Datendienst GPRS sowie Techniken zur Erhöhung der Datenraten in Mobilfunknetzen, wie EDGE (EDGE: Enhanced Data Rates for GSM Evolution), zu unterstützen. Die Mittel zur elektronischen Datenverarbeitung umfassen vorliegend wenigstens einen Chip 11, der insbesondere die Schnittstellen 3 zum Anschließen wenigstens einer Eingabeeinrichtung 12 und die Schnittstellen 2 zum Anschließen wenigstens einer externen Wiedergabeeinrichtung 14 verwaltet beziehungsweise betreibt.

Das Ausführungsbeispiel in Fig. 2 weist zwei Schnittstellen 2 zum Anschließen einer externen Wiedergabeeinrichtung 14 auf, wobei eine Schnittstelle 2 als VGA-Anschlussbuchse und die andere Schnittstelle 2 als S-Videobuchse ausgestaltet ist. Über die S-Videobuchse ist beispielsweise ein Fernsehgerät als Wiedergabeeinrichtung 14 anschließbar. Alternativ und/oder zusätzlich kann über die VGA-Anschlussbuchse beispielsweise ein Computermonitor angeschlossen werden. Die Schnittstellen 3 zum Anschließen wenigstens einer Eingabeeinrichtung 12 sind vorliegend jeweils als USB-Anschluss ausgebildet. Die Vorrichtung weist hiervon in dem Ausführungsbeispiel vier Stück auf. Über wenigstens einen der USB-Anschlüsse ist bei Bedarf insbesondere auch ein USB-Massenspeichermedium 13 anschließbar.

Zur Stromversorgung weist die Vorrichtung 1 einen Anschluss 15 zum Anschließen eines Netzgerätes auf. Ferner weist die Vorrichtung 1 eine von außen zugängliche Schnittstelle 16 zur Aufnahme eines Teilnehmeridentifikationsmoduls, vorliegend einer austauschbaren SIM-Karte, auf. In einer hier nicht dargestellten Ausführungsform kann das Teilnehmeridentifikationsmodul auch direkt in der Vorrichtung 1 integriert sein.

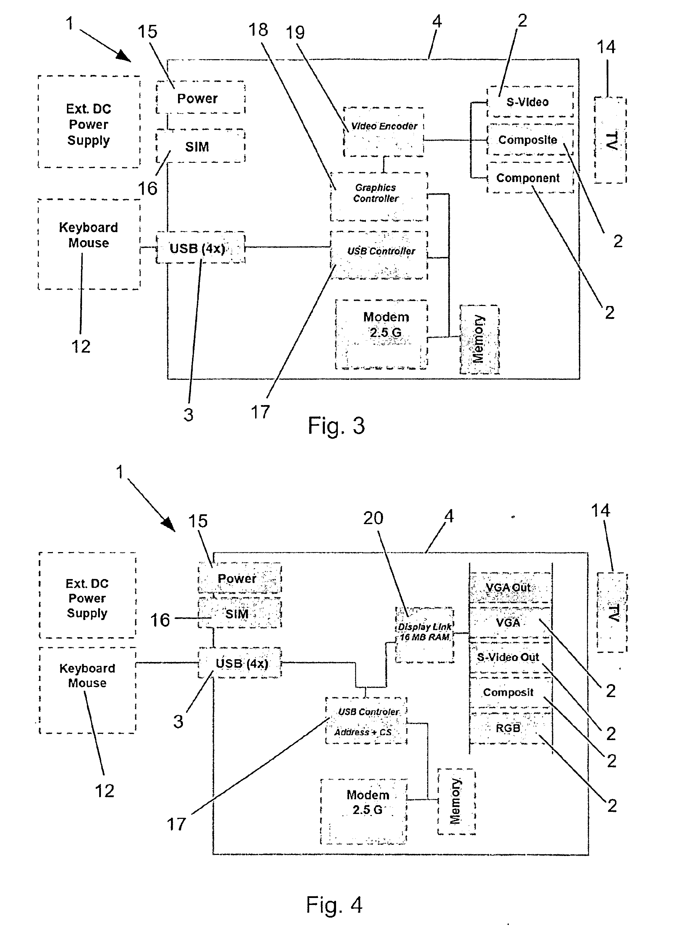

In Fig. 3 ist ein weiteres Ausführungsbeispiel einer erfindungsgemäßen Vorrichtung 1 als Blockschaltbild dargestellt. Als Mittel zum Senden und/oder Empfangen von elektronischen Daten, insbesondere Internetdaten, über ein Mobilfunknetz weist die Vorrichtung 1 vorzugsweise ein Chipset IFX2130 oder ein Chipset XMM6238 oder ein hinsichtlich der Funktionalität vergleichbares Chipset auf. Ferner wären neben anderen möglichen Chipsets insbesondere auch ein Chipset MTK 6225 des Herstellers MediaTek oder ein Chipset XMM 1160 des Herstellers Infineon zur Realisierung denkbar. Die Steuerung der USB-Schnittstellen 3, über die eine Eingabeeinrichtung 12 und/oder ein USB-Massenspeichermedium anschließbar sind, erfolgt durch einen USB-Controller 17. Die Aufbereitung der mittels der externen Wiedergabeeinrichtung 14 darzustellenden Internetdaten erfolgt insbesondere durch einen Graphikcontroller 18 und einen Video-Encoder 19. Als Video-Encoder 19 ist vorzugsweise ein Nexia 21168, ein Fairchild FMS3818 oder ein TI THS8200 verwendbar. Ferner sind aber auch geeignete Encoder anderer Hersteller beziehungsweise anderen Typs für die Verwendung in der erfindungsgemäßen Vorrichtung einsetzbar. Die Ausgangssignale sind als S-Video-, Composite- und/oder Component-Signal über entsprechend ausgebildete Schnittstellen 2 abgreifbar.

Fig. 4 zeigt ein weiteres Ausführungsbeispiel einer erfindungsgemäßen Vorrichtung 1 in einer Blockschaltbilddarstellung. Als Mittel zum Senden und/oder Empfangen von elektronischen Daten, insbesondere Internetdaten, dient hier ein Chipset von MediaTek. Zur Aufbereitung der mittels der externen Wiedergabeeinrichtung 14 darzustellenden Internetdaten dient ein mit dem USB-Bus verbundener Videochip 20, vorliegend ein Videochip von DisplayLink. Der Videochip 20 stellt insbesondere Ausgangssignale gemäß VGA-, S-Video-Composite- und RGB-Standard an entsprechend ausgebildeten Schnittstellen 2 bereit. Dass sämtliche Schnittstellen bereitgestellt werden, ist dabei nicht notwendig. Insbesondere kann aus Kostengründen auf einen zweiten VGA-Connector verzichtet werden.

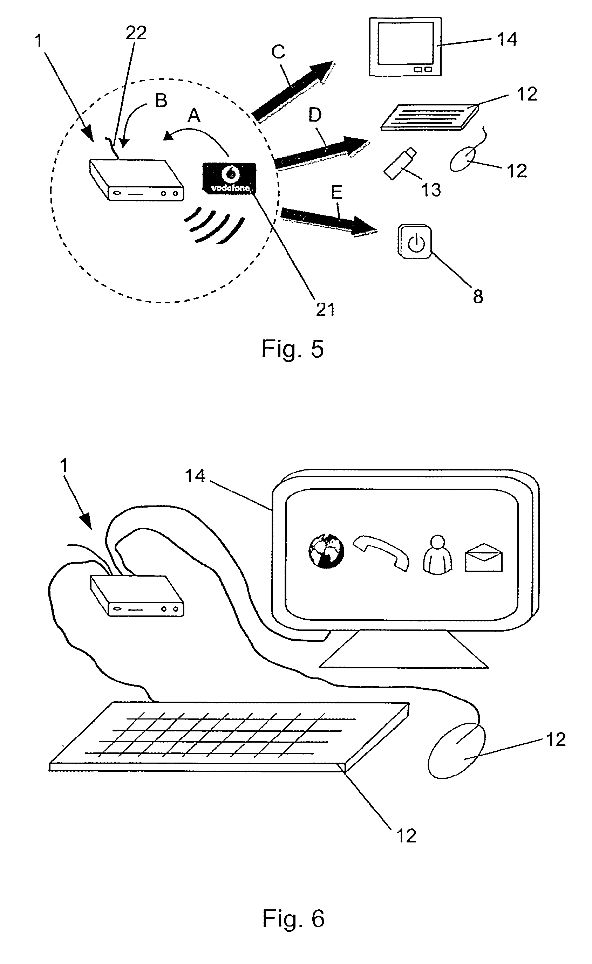

In Fig. 5 ist die Inbetriebnahme einer erfindungsgemäßen Vorrichtung 1 schematisch dargestellt. Zur Inbetriebnahme der Vorrichtung 1 wird in einem Schritt A ein Teilnehmeridentifikationsmodul 21, vorliegend eine SIM-Karte, in die Vorrichtung 1 eingesteckt. In einem Schritt B wird die Vorrichtung 1 über den Anschluss 15 für eine externe Energieversorgung mit einem Stromkabel 22 verbunden. Über eine Schnittstelle 2 zum Anschließen einer externen Wiedergabeeinrichtung 14 (in Fig. 5 nicht explizit dargestellt) wird in einem Schritt C eine externe Wiedergabeeinrichtung 14, vorliegend ein Fernsehgerät, an die Vorrichtung 1 angeschlossen. In einem weiteren Schritt D werden die gewünschten Eingabeeinrichtungen 12, vorliegend einer Computertastatur und eine Computermaus, sowie ein Massenspeichermedium 13, vorliegend ein USB-Stick, an die Vorrichtung 1 angeschlossen. Über ein Bedienelement 8, welches vorliegend als Tastschalter ausgebildet ist, wird die Vorrichtung in einem Schritt E durch Betätigen des Bedienelementes 8 in Betrieb genommen.

Nach Betätigung des Bedienelementes 8 startet das Betriebssystem der Vorrichtung 1, vorliegend das Echtzeitbetriebssystem Nucleus. Daraufhin wird ein Auswahlmenü mittels der eingeschalteten externen Wiedergabeeinrichtung 14 dargestellt, wobei der Nutzer über das Auswahlmenü mittels einer der an der Vorrichtung 1 angeschlossenen Eingabeeinrichtung 12 die gewünschte zu nutzende Funktion auswählen kann. Als Funktionen der Vorrichtung 1 sind dabei insbesondere Internetdienste, wie E-Mail, Instant Messaging oder das World Wide Web, Telefonfunktionen, wie das Aufbauen einer Telekommunikationsverbindung oder der Aufruf einer Übersicht von über in Abwesenheit eingegangenen Telefonanrufen und/oder dergleichen mit einer Telefonfunktion verknüpften Servicefunktionen, oder über das Mobilfunknetz nutzbare Nachrichtendienste, wie SMS oder MMS, auswählbar.

Vorteilhafterweise ist die Vorrichtung 1 für eine Übertragung von Internetdaten mittels einer breitbandigen Übertragungstechnik im Mobilfunknetz, wie UMTS (UMTS: Universal Mobile Telecommunications System), CDMA2000 (CDMA: Code Division Multiple Access) und/oder HSDPA (HSDPA: High Speed Downlink Packet Access) ausgebildet.

Fig. 6 zeigt in einer schematischen Prinzipdarstellung ein Ausführungsbeispiel einer erfindungsgemäßen Vorrichtung 1 im Gebrauchszustand. Über eine Schnittstelle 2 zum Anschließen einer externen Wiedergabeeinrichtung 14, welche vorliegend als VGA-Buchse ausgebildet ist, ist ein Computermonitor als Wiedergabeeinrichtung 14 mit der Vorrichtung 1 verbunden, wobei die seitens der Vorrichtung 1 verarbeiteten Daten zumindest teilweise als Videosignal zur Nutzung mittels des Computermonitors 14 an der VGA-Buchse 2 der Vorrichtung 1 bereitgestellt werden. Über eine Schnittstelle 3 zum Anschließen wenigstens einer Eingabeeinrichtung, welche vorliegend als PS/2-Schnittstelle ausgebildet ist, ist eine Computertastatur als Eingabeeinrichtung 12 angeschlossen. Über eine weitere Schnittstelle 3 zum Anschließen wenigstens einer Eingabeeinrichtung, welche als USB-Schnittstelle ausgebildet ist, ist eine Computermaus als weitere Eingabeeinrichtung 12 angeschlossen.

Die Vorrichtung 1 weist in dem Ausführungsbeispiel einen integrierten Java-basierten Browser auf, welcher unter anderem das Wireless Application Protocol (WAP) unterstützt. Bei der Nutzung des Wireless Application Protocol werden vorteilhafterweise Internetinhalte hinsichtlich der zu übertragenden Datenmenge reduziert, sodass auch bei langsameren Übertragungsraten des Mobilfunknetzes ein schneller Zugriff auf Internetinhalte möglich ist. Die Funktionen des Browsers sind mittels der angeschlossenen Eingabeeinrichtungen 12 bedienbar. Zur weiteren subjektiven Steigerung der Übertragungsgeschwindigkeit von Internetinhalten, insbesondere beim Abspielen von Audio- und/oder Videosequenzen, weist die Vorrichtung vorzugsweise Mittel zum sogenannten Puffern von Internetinhalten auf, wobei vorteilhafterweise vor der Wiedergabe der Internetinhalte zunächst zumindest ein Teil der wiederzugebenden Inhalte in einen Speicher zur zeitversetzten Wiedergabe gespeichert werden. Hierdurch wird die Wiedergabe von Internetinhalten zumindest subjektiv als verzögerungsärmer beziehungsweise verzögerungsfrei wahrgenommen.

Wird die Vorrichtung 1 eine Zeit lang nicht genutzt, das heißt, die Vorrichtung 1 empfängt keine Steuersignale von wenigstens einer der Eingabevorrichtungen 12 und es werden auch keine Daten insbesondere im Rahmen eines Down- oder Uploads über das Mobilfunknetz gesendet und/oder empfangen, so ist vorgesehen, dass die Vorrichtung 1 automatisch eine bestehende Internetverbindung unterbricht. Vorteilhafterweise entstehen dem Nutzer auf diese Weise keine Kosten für eine nicht aktiv genutzte Internetverbindung. Die Zeit, nach der die Vorrichtung 1 die Internetverbindung bei nicht erfolgender Nutzung beendet, ist vorteilhafterweise wenigstens durch den Mobilfunknetzbetreiber und/oder durch den Nutzer vorgebbar.

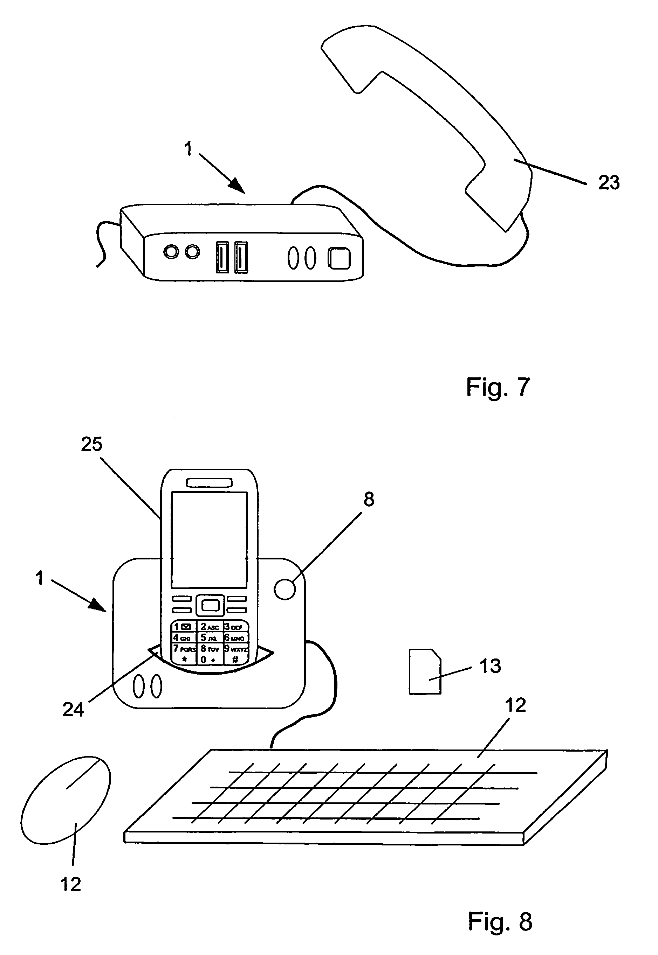

Fig. 7 zeigt ein Ausführungsbeispiel einer erfindungsgemäßen Vorrichtung 1 mit Telefonfunktion. Die Vorrichtung 1 ist dabei ausgebildet, sowohl direkt über das Mobilfunknetz als auch per Voice-over-IP eine Telekommunikationsverbindung herzustellen. Zum Telefonieren ist an der Vorrichtung 1 ein Telefonhörer 23 angeschlossen. Vorteilhafterweise verfügt die Vorrichtung 1 und/oder der Telefonhörer 23 über ein Tastenfeld, über das eine Rufnummer eingebbar ist (in der Figur nicht dargestellt). In einer Ausführungsvariante der Vorrichtung 1 kann die Rufnummer bei Bedarf auch über eine externe Eingabeeinrichtung, insbesondere eine Computertastatur, eingegeben werden. Vorteilhafterweise verfügt die Vorrichtung 1 zusätzlich über wenigstens ein Bedienelement, durch dessen Betätigung ein eingehendes Telefongespräch annehmbar und/oder beendbar ist (in Fig. 7 nicht dargestellt). Eingehende Telefongespräche werden dabei vorteilhafterweise über eine in die Vorrichtung 1 integrierte Info-LED und/oder über wenigstens eine externe Wiedergabeeinrichtung optisch und/oder akustisch signalisiert. In einer weiteren Ausführungsvariante der Vorrichtung weist die Vorrichtung eine integrierte Audioausgabeeinrichtung, vorzugsweise einen Lautsprecher, auf. Über diese Audioausgabeeinrichtung sind bei dieser Ausführungsvariante eingehende Telefongespräche zumindest zusätzlich akustisch signalisierbar.

In Fig. 8 ist ein weiteres Ausführungsbeispiel einer erfindungsgemäßen Vorrichtung 1 skizziert. Hierbei ist die Vorrichtung 1 nach Art einer Ladestation ausgebildet. Die Vorrichtung 1 weist dabei ein Aufnahmeelement 24 zur zumindest teilweisen Aufnahme eines mobilen Endgerätes in die Vorrichtung 1 auf, welches vorliegend als Einsteckschacht mit Kontaktstiften (in Fig. 8 nicht explizit dargestellt) ausgebildet ist, in welchem ein mobiles Endgerät 25 derart anordbar ist, dass das mobile Endgerät 25 elektrisch mit der Vorrichtung 1 verbunden ist. Das Aufnahmeelement 24 dient dabei als Schnittstelle zwischen Vorrichtung 1 und mobilem Endgerät 25. Das mobile Endgerät 25 ist nach Art eines Schnurlos-Telefons ausgestattet, und weist insbesondere eine Zifferntastatur auf. Das mobile Endgerät 25 ist wie ein klassisches DECT-Telefon (DECT: Digital Enhanced Cordless Telecommunication) nutzbar, wobei die Telekommunikationsfunktion vorliegend auf dem GSM-Standard basiert. Das mobile Endgerät 25 weist zur Energieversorgung Akkumulatoren auf, die elektrisch geladen werden, wenn das mobile Endgerät 25 in der Vorrichtung 1 angeordnet ist.

In einer Ausführungsvariante ist das mobile Endgerät 25 ein Mobilfunktelefon mit Mitteln zum Senden und/oder Empfangen von elektronischen Daten, insbesondere Internetdaten, über ein Mobilfunknetz, vorzugsweise ein Mobilfunknetz gemäß einem GSM-, UMTS- und/oder LTE-Mobilfunkstandard, und mit Mitteln zur elektronischen Datenverarbeitung. Vorteilhafterweise ist die Vorrichtung 1 ausgebildet, über das als Schnittstelle ausgebildete Aufnahmeelement 24 die Mitteln zum Senden und/oder Empfangen von elektronischen Daten, insbesondere Internetdaten, über das Mobilfunknetz, und/oder die Mittel zur elektronischen Datenverarbeitung des mobilen Endgerätes 25 zumindest teilweise zur Bereitstellung eines Internetzugangs für wenigstens eine externe Wiedergabeeinrichtung, vorzugsweise ein Fernsehgerät, und zur Verarbeitung von über das Internet empfangenen und/oder über das Internet zu sendende Daten zu nutzen.

Die Vorrichtung 1 ist in dieser Ausführungsvariante vorteilhafterweise mit weniger Hardware ausgestattet und somit kostengünstiger anbietbar. In dieser Ausführungsvariante weist die Vorrichtung 1 aber zumindest eine Schnittstelle zur Verbindung mit dem mobilen Endgerät 25 sowie Mittel zur Aufbereitung der mittels einer externen Wiedergabeeinrichtung darzustellenden Internetdaten und Mittel zur Bereitstellung der aufbereiteten Daten als Ausgangssignal, insbesondere als Video- und/oder Audiosignal, zur Nutzung mittels der wenigstens einen Wiedergabeeinrichtung an wenigstens einer Schnittstelle der Vorrichtung 1 auf. Die Schnittstelle zur Verbindung der Vorrichtung 1 mit dem mobilen Endgerät 25 ist in einer weiteren Ausführungsvariante als drahtlose Schnittstelle, insbesondere als Bluetooth- oder Infrarotschnittstelle ausgebildet.

Wie in den Ausführungsbeispielen zuvor beschrieben, sind auch in dem Ausführungsbeispiel in Fig. 8 über entsprechende Schnittstellen Eingabeeinrichtungen 12, wie Computertastaturen und/oder Zeigegeräte, und/oder USB-Massenspeichermedien 13 an die Vorrichtung 1 anschließbar.

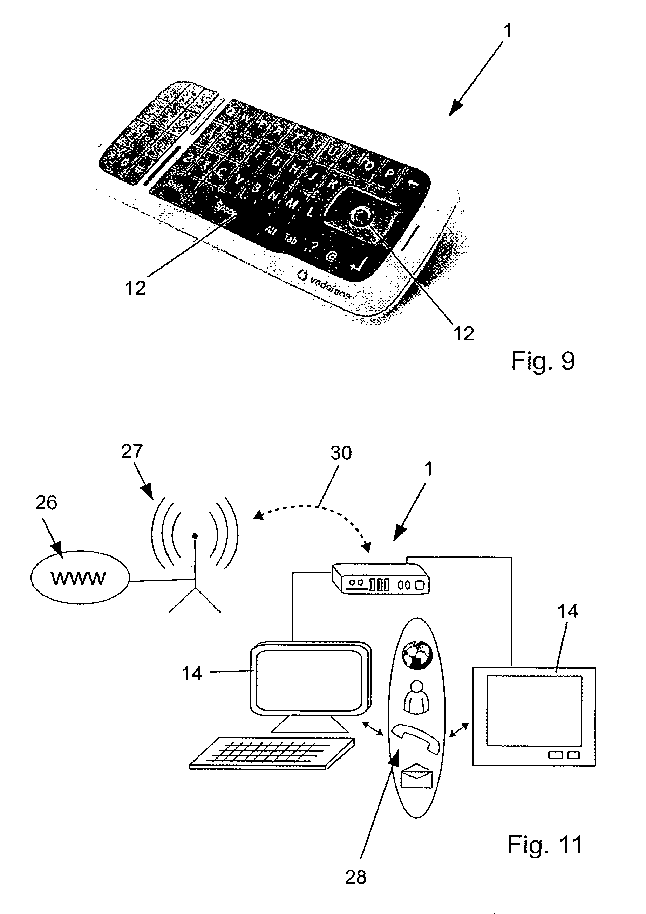

In Fig. 9 ist in einer Prinzipdarstellung ein weiteres Ausführungsbeispiels einer erfindungsgemäßen Vorrichtung 1 dargestellt. Die Vorrichtung 1 ist dabei nach Art einer Eingabeeinrichtung 12 ausgebildet. Die Eingabeeinrichtung 12 weist dabei insbesondere Zifferntasten, Buchstabentasten und/oder weitere Funktionstasten, insbesondere von einer Computertastatur her bekannte Funktionstasten, auf. Des Weiteren verfügt die Eingabeeinrichtung 12 über einen sogenannten Trackball. Statt mit einem Trackball kann die Vorrichtung 1 erfindungsgemäß auch mit einem Mini-Joystick, einem 4-way-Rocker-Key, welcher in vier Richtungen bewegbar ist, oder einem vergleichbaren Bedienelement ausgestattet sein. Mittels eines derartigen Bedienelementes ist vorteilhafterweise ein sogenannter Mauszeiger steuerbar. Vorteilhafterweise wird ein 4-way-Rocker-Key von Opera Mini als Java-basiertem Browser unterstützt, welcher vorzugsweise in die Vorrichtung 1 integriert ist. Die Vorrichtung 1 weist vorteilhafterweise zumindest eine Schnittstelle 3 auf, über die bei Bedarf zusätzliche Eingabeeinrichtungen, wie eine Computermaus, anschließbar sind (Schnittstellen 3 sind in Fig. 9 nicht explizit dargestellt, ebenso wie die weiteren Schnittstellen, insbesondere die Schnittstelle zum Anschließen einer externen Wiedergabeeinrichtung).

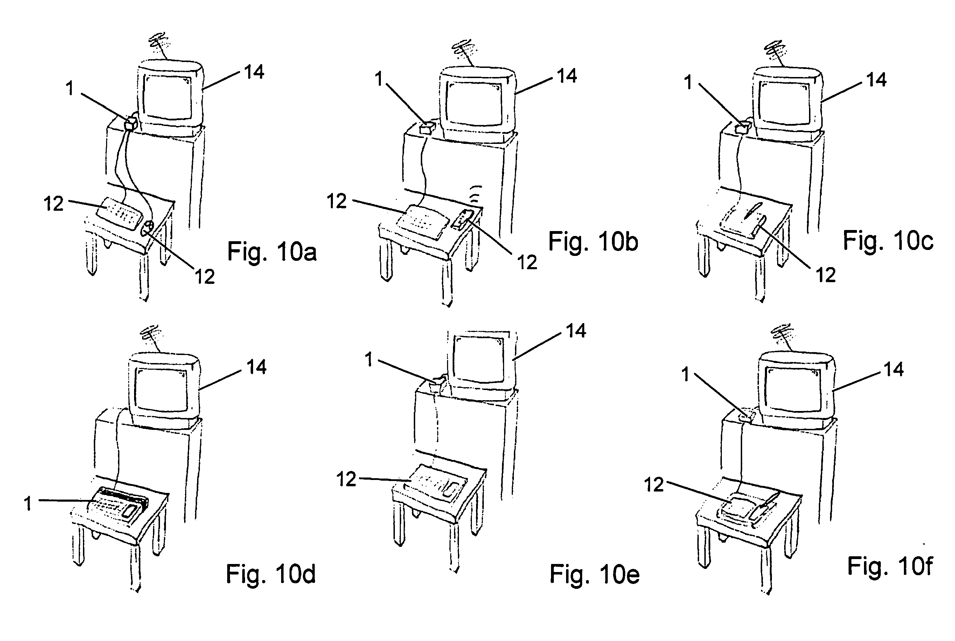

In Fig. 10a bis Fig. 10f sind in Prinzipdarstellungen weitere Ausführungsbeispiele einer erfindungsgemäßen Vorrichtung im Gebrauchszustand dargestellt. An die Vorrichtung 1 sind dabei unterschiedliche Eingabegeräte 12 angeschlossen, insbesondere unterschiedliche Zeigegeräte zur Steuerung einer seitens der Vorrichtung 1 bereitgestellten und auf der externen Wiedergabeeinrichtung 14 dargestellten graphischen Benutzeroberfläche. Die externe Wiedergabevorrichtung 14 ist vorliegend ein Röhrenfernseher, der über eine Composite Schnittstelle mittels einer UHF-Steckverbindung an die Vorrichtung 1 angeschlossen ist.

In Figur 10a sind über ein USB-Kabel eine Computertastatur und eine Computermaus als Eingabeeinrichtungen 12 an einer USB-Schnittstelle der erfindungsgemäßen Vorrichtung 1 angeschlossen.

In Fig. 10b ist neben einer Computertastatur eine Infrarotfernbedienung als weitere Eingabeeinrichtung 12 mit der erfindungsgemäßen Vorrichtung 1 nutzbar. Die Vorrichtung 1 weist hierzu eine Infrarotschnittstelle als weitere Schnittstelle 2 zum Anschließen wenigstens einer Eingabeeinrichtung auf (Schnittstelle 2 in Fig. 10b nicht explizit dargestellt).

In Fig. 10c ist als Eingabeeinrichtung 12 ein sogenanntes Grafiktablett an die Vorrichtung 1 angeschlossen. Mit einem stiftartigen Element können hier Eingaben vorgenommen sowie die graphische Benutzeroberfläche bedient werden.

In Fig. 10d ist die erfindungsgemäße Vorrichtung 1 nach Art einer Eingabeeinrichtung 12 ausgebildet. Die Vorrichtung 1 stellt die seitens der externen Wiedergabeeinrichtung 14 darzustellenden Daten als Videosignal an einer Mini-Din-S-Videobuchse bereit. Mittels eines entsprechenden S-Video-Kabels ist die Vorrichtung 1 mit einem Fernseher als externer Wiedergabeeinrichtung 14 verbunden. Die Vorrichtung 1 weist ein Tastenfeld auf, welches im Wesentlichen der Art einer Computertastatur nachempfunden ist. Des Weiteren weist die Vorrichtung ein sogenanntes Touch-Pad auf, welches der Nutzer mit der Fingerspitze bedienen kann. Anstelle des Touch-Pads sind insbesondere auch ein Trackball, ein sogenannter 4-way-Rocker-Key sowie ein Optical Navigation Sensor als Bedienelement vorgesehen. Die Vorrichtung 1 weist zudem wenigstens eine Schnittstelle 5 zum Anschließen einer insbesondere für Telekommunikationszwecke verwendbaren Einrichtung zum Erfassen von gesprochener Sprache auf. Des Weiteren verfügt die Vorrichtung 1 über eine weitere Schnittstelle 6, über die ein Audiosignal ausgegeben werden kann. Die Schnittstellen 5 und 6, die vorliegend als 3,5 mm-Klinkenbuchse ausgebildet sind, sind beispielsweise mit einem für Telekommunikationszwecke nutzbaren Head-Set verbindbar.

In einer weiteren Ausführungsvariante der Erfindung ist auch eine sprachgesteuerte Bedienung der Vorrichtung 1 vorgesehen, die über eine Audioeingabeeinrichtung erfolgt. Die Audioeingabeeinrichtung ist vorzugsweise ein in die Vorrichtung integriertes oder ein an die Vorrichtung anschließbares Mikrofon über das die Eingabe der Sprachbefehle erfolgt.

Die Mittel zum Senden und/oder Empfangen der Vorrichtung 1 von elektronischen Daten umfassen unter anderem ein Teilnehmeridentifikationsmodul, vorliegend eine SIM-Karte, welche als sogenannte Prepaid-Karte ausgebildet ist. Es ist vorgesehen, dass die Vorrichtung 1 eine sogenannte Guthabentaste aufweist (in Fig. 10d nicht dargestellt), über die ein auf der Prepaid-Karte verbleibendes Restguthaben abrufbar ist. Das Restguthaben wird vorzugsweise nach Betätigung der Guthabentaste auf der externen Wiedergabeeinrichtung 14 eingeblendet.

In Fig. 10e ist an die erfindungsgemäße Vorrichtung 1 eine Eingabeeinrichtung 12 über eine USB-Schnittstelle angeschlossen, wobei die Eingabeeinrichtung 12 sowohl ein Tastenfeld als auch ein sogenanntes Touch-Pad umfasst.

In Fig. 10f ist in die an die Vorrichtung 1 angeschlossene Eingabeeinrichtung neben einem Tastenfeld ein Grafiktablett eingelassen, welches mit einem stiftartigen Eingabegerät bedienbar ist. Die Vorteile von Eingabegeräten 12, in denen ein Zeigegerät zur Steuerung graphischer Benutzeroberflächen integriert ist, liegen insbesondere darin, dass auch in Ländern, in denen kulturbedingt Sitzmöbel und/oder Tische weniger verbreitet und Zeigegeräte nach Art einer Computermaus insofern weniger gut bedienbar sind, eine für den Nutzer komfortable Bedienmöglichkeit bereitgestellt ist.

In Fig. 11 ist ein Verfahren zur Bereitstellung eines Internetzugangs für wenigstens eine externe Wiedergabeeinrichtung 14, vorzugsweise ein Fernsehgerät, und zur Verarbeitung von über das Internet 26 empfangenen und/oder über das Internet 26 zu sendende Daten dargestellt, wobei die verarbeiteten Daten 28 zumindest teilweise als Ausgangssignal, insbesondere als Video- und/oder Audiosignal, zur Nutzung mittels der wenigsten einen Wiedergabeeinrichtung 14 an wenigstens einer Schnittstelle der Vorrichtung 1 bereitgestellt werden, die Bereitstellung des Internetzugangs über ein Mobilfunknetz 27, vorzugsweise ein Mobilfunknetz gemäß einem GSM-, UMTS- und/oder LTE-Mobilfunkstandard erfolgt und die Verarbeitung von Daten, insbesondere von über das Internet 26 empfangenen und/oder über das Internet 26 zu sendende Daten mittels einer erfindungsgemäßen wie zuvor beschriebenen Vorrichtung 1 erfolgt.

Bei dem Verfahren sendet und/oder empfängt (symbolisch dargestellt durch den Pfeil 30) eine erfindungsgemäße Vorrichtung 1 über das Mobilfunknetz 27 Daten über das Internet 26. Diese Daten werden unter Verwendung der Vorrichtung 1 verarbeitet und derart aufbereitet, dass mittels einer externen Wiedergabeeinrichtung 14, vorliegend ein Computermonitor und/oder ein Fernsehgerät, darzustellende Daten 28 als mittels der externen Wiedergabeeinrichtung 14 nutzbares Ausgangssignal bereit gestellt wird. Über eine mit der Vorrichtung 1 verbindbaren Eingabeeinrichtung 12 wird die Vorrichtung 1 bedient, wobei mittels der Vorrichtung 1 insbesondere Internetdienste, wie E-Mail und/oder Instantmessaging, nutzbar sind, und ein Surfen im Internet 26 ermöglicht wird.

Die in den Figuren der Zeichnungen dargestellten und im Zusammenhang dieser beschriebenen Ausführungsbeispiele der Erfindung dienen lediglich der Erläuterung der Erfindung und sind für diese nicht beschränkend.

### Bezugszeichenliste

- 1: erfindungsgemäße Vorrichtung
- 2: Schnittstelle zum Anschließen einer externen Wiedergabeeinrichtung (14)
- 3: Schnittstelle zum Anschließen wenigstens einer Eingabeeinrichtung (12)
- 4: Gehäuse der Vorrichtung (1)
- 5: Schnittstelle zum Anschließen einer Audioeingabeeinrichtung (Mikrofon)
- 6: Schnittstelle zum Anschließen einer Audioausgabeeinrichtung (Kopfhörer)
- 7: Info-LED
- 8: Bedienelement
- 9: Antenne
- 10: Mittel zum Senden und/oder Empfangen von elektronischen Daten, insbesondere Internetdaten, über ein Mobilfunknetz (27) (Modem)
- 11: Mittel zur elektronischen Datenverarbeitung (Chip)
- 12: Eingabeeinrichtung
- 13: Speichermedium (beispielsweise USB-Speicher oder SD-Memory-Card)
- 14: externe Wiedergabeeinrichtung
- 15: Anschluss zum Anschließen einer Energieversorgungsquelle
- 16: Schnittstelle zur Aufnahme eines Teilnehmeridentifikationsmoduls
- 17: USB-Controller
- 18: Grafikcontroller
- 19: Video-Encoder
- 20: Videochip
- 21: Teilnehmeridentifikationsmodul
- 22: Stromkabel
- 23: Telefonhörer
- 24: Aufnahmeelement zur Aufnahme eines mobilen Endgerätes (25) in die Vorrichtung (1)
- 25: mobiles Endgerät
- 26: Internet
- 27: Mobilfunknetz
- 28: verarbeitete Daten
- 29: Schacht zur Aufnahme einer Speicherkarte
- 30: Senden und/oder Empfangen von Internetdaten über ein Mobilfunknetz (27)
- A: Einlegen des Teilnehmeridentifikationsmoduls (21)
- B: Verbinden der Vorrichtung (1) mit der Energieversorgung
- C: Anschließen der externen Wiedergabeeinrichtung (14)
- D: Anschließen von Eingabegeräten (12) und/oder Speichermedien (13)
- E: Inbetriebnahme der Vorrichtung (1) über Bedienelement (8)

## Patentansprüche

1. Vorrichtung (1) zur Bereitstellung eines Internetzugangs für wenigstens eine externe Wiedergabeeinrichtung (14), vorzugsweise ein Fernsehgerät, und zur Verarbeitung von über das Internet (26) empfangenen und/oder über das Internet (26) zu sendende Daten,
wobei die verarbeiteten Daten (28) zumindest teilweise als Ausgangssignal, insbesondere als Video- und/oder Audiosignal, zur Nutzung mittels der wenigstens einen Wiedergabeeinrichtung (14) an wenigstens einer Schnittstelle (2) der Vorrichtung (1) bereitgestellt werden,
**gekennzeichnet durch**
Mittel (10) zum Senden und/oder Empfangen von elektronischen Daten, insbesondere Internetdaten, über ein Mobilfunknetz (27), vorzugsweise ein Mobilfunknetz (27) gemäß einem GSM-, UMTS- und/oder LTE-Mobilfunkstandard,
Mittel (11) zur elektronischen Datenverarbeitung,
wenigstens eine Schnittstelle (3) zum Anschließen wenigstens einer Eingabeeinrichtung (12) und
Mittel zum Verarbeiten von über die Schnittstelle zum Anschließen der wenigstens einen Eingabeeinrichtung (12) empfangenen Steuersignalen.

2. Vorrichtung (1) nach Anspruch 1, **dadurch gekennzeichnet, dass** die Mittel (10) zum Senden und/oder Empfangen von elektronischen Daten über das Mobilfunknetz und die Mittel (11) zur elektronischen Datenverarbeitung wenigstens einen Baseband Prozessor umfassen.

3. Vorrichtung (1) nach Anspruch 1 oder Anspruch 2, **dadurch gekennzeichnet, dass** die Mittel (10) zum Senden und/oder Empfangen von elektronischen Daten über das Mobilfunknetz (27) wenigstens ein Teilnehmeridentifikationsmodul (21) umfassen.

4. Vorrichtung (1) nach einem der Ansprüche 1 bis 3, **dadurch gekennzeichnet, dass** die Vorrichtung (1) ausgebildet ist, eine Übertragung von Internetdaten mittels GPRS (GPRS: General Packet Radio Service), EDGE (EDGE: Enhanced Data Rates for GSM Evolution), UMTS (UMTS: Universal Mobile Telecommunications System), CDMA2000 (CDMA: Code Division Multiple Access) und/oder HSDPA (HSDPA: High Speed Downlink Packet Access) zu unterstützen.

5. Vorrichtung (1) nach einem der Ansprüche 1 bis 4 **gekennzeichnet durch** ein Betriebssystem, vorzugsweise ein Echtzeitbetriebssystem (RTOS, RTOS: real-time operating system), zur Verwaltung der Hardware der Vorrichtung (1) und/oder zur Steuerung der Datenverarbeitung.

6. Vorrichtung (1) nach einem der Ansprüche 1 bis 5 **gekennzeichnet durch** einen integrierten Browser, insbesondere einen MIDP-kompatiblen Browser (MIDP: Mobile Information Device Profile).

7. Vorrichtung (1) nach einem der Ansprüche 1 bis 6 **gekennzeichnet durch** S-Video, Composite, Component, RGB und/oder VGA als Schnittstelle (2) zum Anschließen wenigstens einer externen Wiedergabeeinrichtung (14).

8. Vorrichtung (1) nach einem der Ansprüche 1 bis 7 **gekennzeichnet durch** wenigstens einen Kodierer (Encoder), welcher ausgebildet ist, das Ausgangssignal entsprechend eines von der wenigstens einen Wiedergabeeinrichtung (14) unterstützten Wiedergabeformates an der wenigstens einen Schnittstelle (2) zum Anschließen der wenigstens einen Wiedergabeeinrichtung (14) bereitzustellen.

9. Vorrichtung (1) nach einem der Ansprüche 1 bis 8, **dadurch gekennzeichnet, dass** die Vorrichtung (1) nach Art einer Set-Top-Box ausgebildet ist.

10. Vorrichtung (1) nach einem der Ansprüche 1 bis 9, **dadurch gekennzeichnet, dass** die Vorrichtung (1) zum Aufbau einer Telekommunikationsverbindung ausgebildet ist.

11. Vorrichtung (1) nach einem der Ansprüche 1 bis 10 **gekennzeichnet durch** wenigstens eine Schnittstelle (5) zum Anschließen einer insbesondere für Telekommunikationszwecke verwendbaren Einrichtung zum Erfassen von gesprochener Sprache.

12. Vorrichtung (1) nach einem der Ansprüche 10 oder 11, **gekennzeichnet durch** wenigstens eine Schnittstelle zum Anschließen eines sogenannten Festnetztelefons, wobei die Vorrichtung Mittel zur Signalumwandlung aufweist, derart, dass mittels des Festnetztelefons eine Telekommunikationsverbindung über das Mobilfunknetz (27) herstellbar ist.

13. Vorrichtung (1) nach einem der Ansprüche 1 bis 12, **dadurch gekennzeichnet, dass** die Vorrichtung (1) zur Nutzung wenigstens eines Nachrichtendienstes des Mobilfunknetzes (27), vorzugsweise SMS (SMS: Short Message Service) und/oder MMS (MMS: Multimedia Messaging Service), ausgebildet ist.

14. Vorrichtung (1) nach einem der Ansprüche 1 bis 13, **dadurch gekennzeichnet, dass** die Mittel (10) zum Senden und/oder Empfangen von elektronischen ' Daten und/oder die Mittel (11) zur elektronischen Datenverarbeitung zumindest teilweise durch ein in dem Mobilfunknetz (27) betreibbares mobiles Endgerät (25), vorzugsweise ein Mobilfunktelefon oder einen Datenstick, bereitgestellt werden, wobei das mobile Endgerät (25) über eine Schnittstelle (24) mit der Vorrichtung (1) verbindbar ist.

15. Vorrichtung (1) nach Anspruch 14, **dadurch gekennzeichnet, dass** die Vorrichtung (1) zur Aufnahme des mobilen Endgerätes (25) nach Art einer Ladestation für das mobile Endgerät (25) ausgebildet ist.

16. Vorrichtung (1) nach einem der Ansprüche 1 bis 15, **dadurch gekennzeichnet, dass** diese nach Art einer Eingabeeinrichtung ausgebildet ist, wobei die Eingabeeinrichtung wenigstens eine Tastatur aufweist.

17. Verfahren zur Bereitstellung eines Internetzugangs für wenigstens eine externe Wiedergabeeinrichtung (14), vorzugsweise ein Fernsehgerät, und zur Verarbeitung von über das Internet (26) empfangenen und/oder über das Internet (26) zu sendende Daten,
wobei die verarbeiteten Daten (28) zumindest teilweise als Ausgangssignal, insbesondere als Video- und/oder Audiosignal, zur Nutzung mittels der wenigstens einen Wiedergabeeinrichtung (14) an wenigstens einer Schnittstelle (2) einer Vorrichtung (1) bereitgestellt werden,
**dadurch gekennzeichnet, dass**
die Bereitstellung des Internetzugangs über ein Mobilfunknetz (27), vorzugsweise ein Mobilfunknetz (27) gemäß einem GSM-, UMTS- und/oder LTE-Mobilfunkstandard erfolgt
und die Verarbeitung von Daten, insbesondere von über das Internet (26) empfangenen und/oder über das Internet (26) zu sendende Daten mittels einer Vorrichtung (1) nach einem der Ansprüche 1 bis 16 erfolgt.
